# EUROPÄISCHE PATENTANMELDUNG

(11) **EP 3 163 397 A2**
(43) Veröffentlichungstag der Anmeldung: **03.05.2017**
(21) Anmeldenummer: 16001733.1
(22) Anmeldetag: 04.08.2016
(51) Int. Cl.: G05D 1/08

(54) **FLUGREGELUNGSEINRICHTUNG FÜR EINEN LENKFLUGKÖRPER UND VERFAHREN ZUR LENKUNG EINES LENKFLUGKÖRPERS**

(30) Priorität: 27.08.2015 DE 102015011059; 09.04.2016 DE 102016004363
(71) Anmelder: Diehl Defence GmbH & Co. KG, 88662 ÜBERLINGEN (DE)
(72) Erfinder: Fisch, Peter Gerd, DE - 88662 Überlingen (DE); Weltin, Ingo, DE - 88682 Salem (DE)
(74) Vertreter: Diehl Patentabteilung

(57) **Zusammenfassung**

Eine Flugregelungseinrichtung (18) für einen um eine Roll-, Nick- und Gierachse (20, 22, 24) lenkbaren Lenkflugkörper (2) mit zumindest zwei, zumindest teilweise verschwenkbaren Flügelanordnungen (12) umfassend eine Steuer- und Navigationseinrichtung (30) und eine Ansteuerelektronik (32) für die Stellantriebe (14) der Flügelanordnungen (12), wobei die Steuer- und Navigationseinrichtung (30) Roll- , Nick- und Gierkommandos (R, N, G) generiert und die Ansteuerelektronik (32) Ansteuersignale (A1, A2, A3, A4) für die Stellantriebe (14) generiert, enthält eine signalverarbeitende elektronische Schaltung (34, 40, 44), die die Stellantriebe (14) wahlweise mit vollständigen Ansteuersignalen (A1, A2, A3, A4) beaufschlagt oder mit modifizierten Ansteuersignalen (A1', A2', A3', A4') beaufschlagt, wobei mindestens eines der Roll-, Nick- und Gierkommandos (R, N, G) genullt ist.

Bei einem Verfahren zur Lenkung eines von einer Trägerplattform abkoppelbaren Lenkflugkörpers (2) mit einer erfindungsgemäßen Flugregelungseinrichtung (18) wird der Lenkflugkörper (2) von der Trägerplattform abgekoppelt, wird ein Zeitgeber (36, 42, 46) aktiviert und wird auf die Regelung mindestens einer der Lagen Rolllage und/oder Nicklage und/oder Gierlage des Lenkflugkörpers (2) in einer ersten, an die Abkopplung anschließenden Flugphase während einer Zeitspanne mittels modifizierter Ansteuersignale (A1', A2', A3', A4') für die Stellantriebe (14) verzichtet, die das entsprechende mindestens eine Roll- und/oder Gier- und/oder Nickmoment, auf das verzichtet wird, auf den Lenkflugkörper (2) nicht bewirken, und die Roll-, Nick- und Gierlage des Lenkflugkörpers (2) nach Ablauf der Zeitspanne in einer zweiten Flugphase, mittels unmodifizierter vollständiger Ansteuersignale (A1, A2, A3, A4) geregelt.

## Beschreibung

Die Erfindung betrifft eine Flugregelungseinrichtung für einen um eine Roll-, Nick- und Gierachse lenkbaren Lenkflugkörper mit zumindest zwei, zumindest teilweise verschwenkbaren Flügelanordnungen zur Erzeugung von Roll-, Nick- und Giermomenten umfassend eine Steuer- und Navigationseinrichtung und eine mit der Steuer- und Navigationseinrichtung signaltechnisch verbundene Ansteuerelektronik für die Stellantriebe der Flügelanordnungen.

Lenkflugkörper sind üblicherweise mit vier, vorzugsweise bezogen auf den Rumpf des Lenkflugkörpers kreuzförmig oder gleichmäßig um den Umfang des Lenkflugkörpers verteilt angeordneten, zumindest teilweise verschwenkbaren Flügeln versehen, welche über eine Flugregelungseinrichtung so ansteuerbar sind, dass eine Roll-Nick-GierBewegung des Lenkflugkörpers möglich ist, wodurch der Lenkflugkörper entlang einer gewünschten Flugbahn geführt werden kann.

Zur Vermeidung von Beschädigungen einer Trägerplattform während des Abkoppelns eines Lenkflugkörpers von der Trägerplattform ist es bekannt, die Rudermaschine bzw. die Stellantriebe mechanisch so zu verriegeln, dass die Flügelanordnungen in einer neutralen, keine Drehmomente erzeugenden Position gehalten werden. Ungewollte Ausschläge der Flügelanordnungen kurz nach dem Abkoppeln des Lenkflugkörpers, die zu unbeabsichtigten, auf den Lenkflugkörper einwirkenden Drehmomenten und damit einer etwaigen Kollision mit der Trägerplattform führen könnten, werden dadurch vermieden.

Bei auf Rollmomente empfindlich reagierenden Lenkflugkörpern, wie beispielsweise Lenkflugkörpern, die auf ihrer Unterseite mit einem Lufteinlauf für ihr Triebwerk versehen sind, kann es gerade beim Abkoppeln des Lenkflugkörpers von einer Trägerplattform, wie beispielsweise einem Luftfahrzeug oder einer an einem Luftfahrzeug befestigten Startvorrichtung, durch die dabei auftretenden aerodynamischen Kräfte zu unerwünschten, sich nachteilig auf das Flugverhalten des Lenkflugkörpers auswirkenden Rollbewegungen kommen. Dabei kann es passieren, dass der Lenkflugkörper so gedreht wird, dass der Lufteinlauf auf der Oberseite zu liegen kommt und der Lenkflugkörper nicht mehr oder nur mit hohem zeitlichem Aufwand in eine Lage überführbar ist, in dem seine nachfolgende Flugbahn wieder regelbar ist.

Es ist daher eine Aufgabe der Erfindung, eine Flugregelungseinrichtung für einen Lenkflugkörper anzugeben, die einen sicheren Abgang eines Lenkflugkörpers von einer Trägerplattform erlaubt und insbesondere mit keinen Gewichtsnachteilen für den Lenkflugkörper verbunden ist.

Diese Aufgabe wird gelöst durch eine Flugregelungseinrichtung für einen um eine Roll-, Nick- und Gierachse lenkbaren Lenkflugkörper gemäß den Merkmalen von Patentanspruch 1. Die Flugregelungseinrichtung für den um eine Roll-, Nick- und Gierachse lenkbaren Lenkflugkörper mit zumindest zwei, zumindest teilweise verschwenkbaren Flügelanordnungen zur Erzeugung von Roll-, Nick- und Giermomenten umfasst dabei eine Steuer- und Navigationseinrichtung und eine mit der Steuer- und Navigationseinrichtung signaltechnisch verbundene Ansteuerelektronik für die Stellantriebe der Flügelanordnungen, wobei die Steuer- und Navigationseinrichtung dazu eingerichtet ist, Roll-, Nick- und Gierkommandos zur Lenkung des Lenkflugkörpers zu generieren und die mit Roll-, Nick- und Gierkommandos beaufschlagte Ansteuerelektronik dazu eingerichtet ist, aus den ihr zugeführten Roll-, Nick- und Gierkommandos Ansteuersignale für die Stellantriebe der Flügelanordnungen zu generieren. Es wird vorgeschlagen, dass die Flugregelungseinrichtung erfindungsgemäß weiterhin eine signalverarbeitende elektronische Schaltung umfasst, die so ausgestaltet und mit der Steuer- und Navigationseinrichtung und / oder mit der Ansteuerelektronik signaltechnisch verbunden ist, dass die Stellantriebe wahlweise mit vollständigen Ansteuersignalen beaufschlagbar sind, die den vollständigen Roll-, Nick- und Gierkommandos entsprechen, die von der Steuer- und Navigationseinrichtung erzeugt werden. Alternativ sind die Stellantriebe mit modifizierten Ansteuersignalen beaufschlagbar. Diese sind derart modifiziert, dass mindestens eines der Roll-, Nick- und Gierkommandos der Steuer- und Navigationseinrichtung genullt ist. "Genullt" bedeutet, dass dieses Kommando in der Flugregelungseinrichtung nicht umgesetzt wird, also keine entsprechende Auslenkung der Stellantriebe erfolgt. Nachfolgende Elemente betrachten dieses Kommando als neutrales Kommando, z.B. mit Wert einer Neutralstellung, insbesondere Null bzw. einen neutralen Gleichwert. Das entsprechende Roll-, Nick- oder Giermoment wird am Flugkörper nicht erzeugt. Beispielsweise wird also nur ein Rollmoment gemäß dem Rollkommando der Steuer-und Navigationseinrichtung erzeugt. Die Gier- und Nickkommandos der Steuer- und Navigationseinrichtung werden nicht umgesetzt und kein Gier- und Nickmoment erzeugt..

Unter "vollständigen" Ansteuersignalen, Kommandos etc. sind jeweils solche zu verstehen, die bei einer vollständigen Flugregelung bzw. -steuerung des Flugkörpers, z.B. im regulären Marschbetrieb vorhanden sind bzw. auftreten und insgesamt verwendet und verarbeitet werden. Die Informationen sind in keiner Weise verändert, genullt, beeinflusst oder ähnliches.

Unter "modifizierten" Ansteuersignalen, Kommandos etc. sind solche zu verstehen, die bei einer vergleichsweise unvollständigen Flugregelung bzw. -steuerung des Flugkörpers vorhanden sind bzw. auftreten. Die Informationen sind z.B. verändert oder genullt. Z.B. wird nur das Rollkommando der Steuer- und Navigationseinrichtung verwendet, Gier- und Nickkommando werden ignoriert und nicht weiter verarbeitet. Nachfolgende Elemente betrachten Gier- und Nickkommando als Null-Kommando. Oder es werden z.B. nur Ansteuersignale für zwei von vier verschwenkbaren Flügelanordnungen verwendet, um diese aktiv zu verstellen, die beiden anderen Ansteuersignale werden ignoriert und die betreffenden Flügelanordnungen in Neutralstellung gehalten.

Unter "modifizierten Ansteuersignalen" werden auch die Ansteuersignale für die zumindest zwei Flügelanordnungen verstanden, bei denen zumindest eines der Ansteuersignale für eine Flügelanordnung modifiziert ist. Sobald also einem Stellantrieb ein modifiziertes Ansteuersignal zugeführt wird, wird vorliegend von "modifizierten Ansteuersignalen" gesprochen. Von modifizierten Ansteuersignalen wird insbesondere auch dann gesprochen, wenn eines der Ansteuersignale von dem Ansteuersignal abweicht, welches von der Ansteuerelektronik erzeugt werden würde, wenn keine signalverarbeitende elektronische Schaltung vorhanden wäre.

Durch die erfindungsgemäßen Maßnahmen können alle beliebigen Kombinationen von Roll-, Nick- und Gierkommandos erlaubt oder verhindert werden. Folgende Kombinationen von Momenten, die umgesetzt bzw. erlaubt bzw. weiterverarbeitet werden, sind denkbar, die jeweils nicht genannten Momente werden unterdrückt bzw. blockiert bzw. genullt (R: Roll, G: Gier, N: Nick): RN, RG, NG, R, N, G. Z.B. wird bei der Kombination "RG" das Roll- und Giermoment umgesetzt, das Nickmoment wird unterdrückt.

Die Erfindung geht von der Erkenntnis aus, dass mit einer mechanischen Verriegelung zwar ungewollte Ausschläge von Flügelanordnungen vermeidbar sind, mechanische Verriegelungen jedoch auch eine zusätzliche Gewichtsbelastung für einen Lenkflugkörper bedeutet, die sich nachteilig auf seine maximale Reichweite auswirken kann.

Weiterhin geht die Erfindung von der Erkenntnis aus, dass die Wahrscheinlichkeit durch ungewollte Momente, z.B. Nick- und Giermomente, Beschädigungen an Trägerplattform und / oder Lenkflugkörper kurz nach dem Abkoppeln des Lenkflugkörpers von der Trägerplattform hervorzurufen höher ist, als die Wahrscheinlichkeit im Fall einer unbeabsichtigten Bewegung bezüglich der verbleibenden Momente, z.B. einer Rollbewegung, des Lenkflugkörpers.

Darüber hinaus geht die Erfindung von der Erkenntnis aus, dass es bei auf unerwünschte Bewegungen, z.B. Rollbewegungen, empfindlich reagierenden Lenkflugkörpern vorteilhaft ist, wenn das entsprechende Moment, z.B. Rollmoment, möglichst zeitnah nach dem Abkoppeln des Lenkflugkörpers von einer Trägerplattform regelbar ist, um zu verhindern, dass der Lenkflugkörper aufgrund der beim Abkoppelvorgang oder kurz danach auf den Lenkflugkörper einwirkenden aerodynamischen Kräfte unerwünschte Momente, z.B. Rollmomente, erfährt und dadurch in eine instabile, später nur noch schwer regelbare Fluglage gerät.

Die Erfindung geht von der Überlegung aus, dass durch das Vorsehen getrennter Stellantriebe für eine Flügelanordnung für die Erzeugung von Rollmomenten und Nick-und Giermomenten zwar eine Regelung der Rolllage des Lenkflugkörpers unabhängig von einer Regelung der Nick- und Gierlage realisierbar ist, dies jedoch aber nicht nur eine höhere Gewichtsbelastung aufgrund zusätzlicher Stellantriebe, sondern auch durch die zumindest für den Stellantrieb für die Nick- und Giermomente erforderliche mechanische Verriegelung bedeutet. Dies gilt entsprechend für andere Kombinationen von erlaubten und zu blockierenden bzw. zu nullenden Momentbewegungen.

Dieser Nachteil kann durch die Erfindung umgangen werden. Durch das Vorsehen der elektronischen Schaltung, die so ausgestaltet und mit der Steuer- und Navigationseinrichtung und / oder mit der Ansteuerelektronik signaltechnisch verbunden ist, dass die Stellantriebe der zumindest zwei Flügelanordnungen nur mit derart modifizierten Ansteuersignalen beaufschlagbar sind, die ein erwünschte Momente, z.B. Rollmoment, auf den Lenkflugkörper bewirken, kann eine zeitnahe von einer Regelung der restlichen Momente, z.B. Nick- und Giermomente, isolierte Regelung des erwünschten Moments nach Abkoppeln des Lenkflugkörpers erfolgen. Weiterhin ist weder das Vorsehen von mehr als einem Stellantrieb pro Flügelanordnung erforderlich noch das Vorsehen einer schweren und u. U. auch großbauenden mechanischen Verriegelung. Eine mechanische Verriegelung wäre deshalb groß und schwerbauend, da einzelne Ruderbewegungen blockiert werden müssen, andere aber (z.B. für einen Rollbefehl) ausgeführt werden können müssen. Aus diesen Forderungen ergibt sich eine komplexe und komplizierte Verriegelungsmechanik.

Ein weiterer positiver Effekt der elektronischen Schaltung beruht auf ihrer Realisierung in Hardware. Hierdurch kann gegenüber einer softwaretechnischen Realisierung auf sicherheitskritische, fehleranfällige Software verzichtet werden. Zwar könnte versucht werden, softwaretechnisch über einen entsprechenden Algorithmus die von der Flugregelungseinrichtung bzw. von der Ansteuerelektronik erzeugten Ansteuersignale so zu verändern, dass durch die Flügelanordnungen nur gewünschte Momente erzeugt werden, jedoch ist eine solche Software nur bedingt und sehr aufwändig hinsichtlich etwaiger Fehler prüfbar, so dass etwaige Fehlansteuerungen der Stellantriebe nicht mit hinreichender Sicherheit ausgeschlossen werden können.

Die Flugregelungseinrichtung gemäß vorliegender Erfindung ist insbesondere für Lenkflugkörper geeignet, die nach einem Abkoppelvorgang rollstabilisiert werden müssen, um nicht in einen nicht mehr regelbaren Flugzustand oder erst nach einer gewissen Zeitspanne zuverlässig regelbaren Flugzustand zu geraten. Besonders bevorzugt ist die Flugregelungseinrichtung gemäß vorliegender Erfindung geeignet für Lenkflugkörper mit einem an ihrer Unterseite vorgesehenem Lufteinlass für ihr Triebwerk und mit vorzugsweise vier um den Umfang des Flugkörperrumpfes verteilten Flügelanordnungen, insbesondere kreuzförmig angeordneten Flügelanordnungen. Die Flugregelungseinrichtung ist dazu zweckmäßigerweise zur Ansteuerung von vier unabhängig voneinander agierenden Stellantrieben eingerichtet, wobei jeder der Flügelanordnungen ein Stellantrieb zugeordnet ist. Bei den Flügelanordnungen kann es sich um Tragflächen in beispielsweise X-Anordnung mit über die Stellantriebe auslenkbaren Rudern als Endklappen handeln.

Die Steuer- und Navigationseinrichtung der Flugregelungseinrichtung kann zur Lenkung des Lenkflugkörpers auf einer gewünschten Flugbahn bzw. zur Erzeugung entsprechender Roll-, Nick- und Gierkommandos mit Daten aus einem Datenspeicher der Flugregelungseinrichtung, der Informationen zu einer gewünschten Mission des Lenkflugkörpers enthält, beaufschlagt werden. Auch ein Empfang von externen Daten wie beispielsweise von einer Trägerplattform über eine entsprechende Empfangseinrichtung, z. B. eine im Lenkflugkörper vorgesehene Antenne und zugehörige Elektronik ist möglich. Zweckmäßigerweise ist der Lenkflugkörper jedoch mit einem Radarsucher oder einem optischen Sucher und einer Inertialeinheit ausgestattet, wobei aus deren erfassten Informationen über eine Sensorik Daten bzw. Signale zur Beaufschlagung der Steuer- und Navigationseinrichtung erzeugt werden.

Von Vorteil ist es, wenn die elektronische Schaltung signaltechnisch derart mit einem Zeitgeber verbunden ist, dass während einer von dem Zeitgeber vorgegebenen Zeitspanne die Stellantriebe mit den modifizierten Ansteuersignalen beaufschlagbar sind. Nach Ablauf der Zeitspanne sind die Stellantriebe mit den von der Ansteuerelektronik generierten vollständigen Ansteuersignalen beaufschlagbar. Hierdurch ist es möglich, dass während der Zeitspanne bzw. während einer ersten Flugphase, also beispielsweise einer Übergangsphase nach dem Abkoppeln des Lenkflugkörpers ausschließlich die gewünschte Lage, z.B. die Rolllage des Lenkflugkörpers, geregelt wird, wohingegen nach Ablauf der von dem Zeitgeber vorgegebenen Zeitspanne, also in einer zweiten Flugphase, bei der es sich um eine Freiflug- oder Marschphase des Lenkflugkörpers handeln kann, nicht nur die gewünschte Lage, z.B. Rolllage, sondern alle Lagen, z.B. auch Nick- und Gierlage, regelbar sind. Dadurch ist ein sicherer Abgang des Lenkflugkörpers von einer Trägerplattform und eine anschließende Lenkung auf einer gewünschten Flugbahn realisierbar.

Besonders geschickt ist es, wenn der Zeitgeber in Hardware realisiert ist. Durch die Realisierung des Zeitgebers als Elektronik-Baugruppe - und nicht in Software - kann der Einsatz von sicherheitskritischer, fehleranfälliger Software umgangen werden und ein beschädigungsfreies Abkoppeln des Lenkflugkörpers von einer Trägerplattform und eine anschließende erfolgreiche Flugkörpermission erreicht werden. Die Sicherheit des Systems "Flugregelungseinrichtung" wird dadurch erhöht.

In einer bevorzugten Variante ist der Zeitgeber über einen Sensor in Gang setzbar, der dazu eingerichtet ist, ein Abkoppeln des Lenkflugkörpers von einer Trägerplattform zu sensieren. Dieser Sensor kann beispielsweise ein mechanisches und / oder elektronisches Trennen von Verbindungen zwischen Trägerplattform und Lenkflugkörper sensieren oder auch das Reißen einer Reißleine, mit der der Lenkflugkörper nach dem Abkoppeln noch für einen kurzen Zeitraum verbunden bleibt, um für einen Sicherheitsabstand zwischen Lenkflugkörper und Trägerplattform zu sorgen.

Von Vorteil ist es, wenn die elektronische Schaltung ein Filter ist. Ein Filter kann einfach in Hardware realisiert werden und erlaubt es, Signalanteile eines elektrischen Signals zu unterdrücken oder abzuschwächen. Je nach Auslegung des Filters ist es auch möglich, Signale zu sperren oder auf Null zu setzen. Über ein Filter kann sichergestellt werden, dass an den Signaleingängen des Filters vorliegende Signale dieses an seinen Signalausgängen in gewünschter Form verlassen. Hierdurch ist es auf einfache Weise möglich, modifizierte Ansteuersignale zu erzeugen.

Eine vorteilhafte Ausführungsform der Erfindung sieht vor, dass das Filter signaltechnisch zwischen Steuer- und Navigationseinrichtung und Ansteuerelektronik so angeordnet ist, dass die Signaleingänge des Filters mit den Roll-, Nick- und Gierkommandos der Steuer- und Navigationseinrichtung beaufschlagbar sind und die Signaleingänge der Ansteuerelektronik mit durch das Filter modifizierten Roll-, Nick-und Gierkommandos zur Erzeugung der modifizierten Ansteuersignale oder unmodifizierten Roll-, Nick- und Gierkommandos zur Erzeugung der vollständigen Ansteuersignale beaufschlagbar sind. Durch diese signaltechnische Anordnung kann sichergestellt werden, dass - im Falle der Nullung mindestens eines der Kommandos - die Ansteuerelektronik bereits nur noch mit Signalen beaufschlagt wird, die später nicht zu einem auf den Lenkflugkörper wirkenden unerwünschten, zu nullenden Moment, z.B. Nick- oder Giermoment, führen können. Eine Modifikation des gewünschten Kommandos, z.B. des Rollkommandos, ist nicht zwingend erforderlich, so dass eine Hindurchleitung dieses Kommandos durch das Filter - ohne dass das Kommando eine Signaländerung erfährt- besonders geschickt ist.

Praktischerweise ist das Filter so ausgestaltet ist, dass eine signaltechnische Durchleitung der Kommandos der Steuer- und Navigationseinrichtung an die Ansteuerelektronik wahlweise ermöglichbar oder verhinderbar ist. So ist die signaltechnische Durchleitung unerwünschter Kommandos, z.B. Nick- und Gierkommandos, der Steuer- und Navigationseinrichtung an die Ansteuerelektronik verhinderbar. Insbesondere kann vorgesehen sein, dass diese Kommandos jeweils auf Null gesetzt werden. Bevorzugt ist das Filter weiterhin so ausgestaltet, dass die erwünschten Kommandos, z.B. Rollkommandos, der Steuer- und Navigationseinrichtung unverändert durchgeleitet werden.

Bevorzugt ist das Filter mit dem Zeitgeber so signaltechnisch verbunden ist, dass die signaltechnische Durchleitung bis zum Ablauf der vorgegebenen Zeitspanne verhinderbar ist und nach Ablauf der vorgegebenen Zeitspanne die von der Steuer-und Navigationseinrichtung erzeugten Roll-, Nick- und Gierkommandos das Filter unmodifiziert passieren. Dadurch können durch die Flugregelungseinrichtung zwei unterschiedliche, zeitlich aufeinander folgende Flugphasen des Lenkflugkörpers realisiert werden. In der ersten Flugphase - während der vorgegebenen Zeitspanne - ist das Filter der Flugregelungseinrichtung sozusagen "aktiv" und bewirkt, dass z.B. nur die Rolllage des Lenkflugkörpers regelbar ist und in der zweiten, nachfolgenden Flugphase - nach Ablauf der Zeitspanne - ist das Filter "passiv" bzw. wirkt so, als ob es signaltechnisch gar nicht vorhanden wäre, so dass eine Roll-, Nick- und Gierlage des Lenkflugkörpers regelbar ist.

Eine andere vorteilhafte Ausführungsform der Erfindung sieht vor, dass das Filter signaltechnisch zwischen der Ansteuerelektronik und den Stellantrieben so angeordnet ist, dass die Signaleingänge des Filters mit den von der Ansteuerelektronik erzeugten vollständigen Ansteuersignalen beaufschlagbar sind und die Stellantriebe mit den vom Filter modifizierten Ansteuersignalen beaufschlagbar sind. Durch diese signaltechnische Anordnung des Filters "nach" der Ansteuerelektronik und "vor" den Stellantrieben ist eine direkte Beaufschlagung der Stellantriebe mit den gewünschten Ansteuersignalen realisierbar. Es kann davon ausgegangen werden, dass die Ansteuersignale bis sie die Stellantriebe erreichen, kaum noch Signalstörungen ausgesetzt sind, so dass die das Filter verlassenden Ansteuersignale die Stellantriebe weitestgehend unverändert erreichen und der Lenkflugkörper die gewünschte Lenkung erfährt.

Vorteilhafterweise ist das Filter so ausgestaltet, dass modifizierte Ansteuersignale erzeugbar sind, die identisch sind. Dadurch, dass es durch das Filter möglich ist, keine individuellen Ansteuersignale an einen jeweiligen Stellantrieb mehr durchzuleiten, sondern jedem Stellantrieb das identische Ansteuersignal zuzuleiten, wird ein gleichsinniges Ausschlagen der Flügelanordnungen bzw. ihres verschwenkbaren Teils, wie eines Ruders, erzwungen und damit nur eine Rolllagen-Regelung des Lenkflugkörpers möglich. Zur Erzeugung identischer Ansteuersignale kann vorgesehen sein, dass eine Anforderung für einen Ausschlag einer Flügelanordnung, also ein Ansteuersignal der Ansteuerelektronik für eine Flügelanordnung, mittels des Filters auch der oder den weiteren Flügelanordnungen bzw. Stellantrieben zugeordnet wird. Zumindest ein Ansteuersignal erfährt also eine Modifikation.

Bevorzugterweise ist das Filter mit dem Zeitgeber so signaltechnisch verbunden, dass nach Ablauf der vorgegebenen Zeitspanne die von der Ansteuerelektronik generierten vollständigen Ansteuersignale das Filter unmodifiziert passieren, also die individuellen Anforderungen eines Ausschlags einer Flügelanordnung auch an jede Flügelanordnung durchgeleitet werden. Auch in dieser Variante können durch die Flugregelungseinrichtung zwei unterschiedliche, zeitlich aufeinander folgende Flugphasen des Lenkflugkörpers realisiert werden, in welcher in einer ersten Flugphase (während der Zeitspanne) das Filter der Flugregelungseinrichtung sozusagen "aktiv" und in einer zweiten, nachfolgenden Flugphase (nach Ablauf der Zeitspanne) das Filter "passiv" ist.

In einer weiteren vorteilhaften Ausführungsform der Erfindung ist vorgesehen, dass es sich bei der elektronischen Schaltung um eine weitere Ansteuerelektronik handelt, die signaltechnisch mit der Steuer- und Navigationseinrichtung derart verbunden ist, dass sie nur mit Roll- und/oder Nick- und/oder Gierkommandos der Steuer- und Navigationseinrichtung beaufschlagt wird, von denen mindestens eines genullt ist, wobei die weitere Ansteuerelektronik dazu eingerichtet ist, aus den Roll- und/oder Nick- und/oder Gierkommandos modifizierte Ansteuersignale für die Stellantriebe zu erzeugen. Es kann vorgesehen sein, dass die an den Signalausgängen der weiteren Ansteuerelektronik vorliegenden modifizierten Ansteuersignale über gesonderte Signalleitungen den Stellantrieben zugeführt werden oder die Signalleitungen der eigentlichen Ansteuerelektronik genutzt werden. Durch das Vorsehen einer weiteren Ansteuerelektronik, die ausschließlich mit den gewünschten Kommandos, z.B. Rollkommandos, beaufschlagt wird, kann sichergestellt werden, dass keine unerwünschten, z.B. Nick- und Gier-Kommandos, verarbeitet werden. Durch die ausschließliche Verarbeitung von gewünschten Kommandos sind nur solche modifizierten Ansteuersignale erzeugbar, die ein gewünschtes, z.B. bei Rollkommandos gleichsinniges, Ausschlagen der Flügelanordnungen bewirken, also nur gewünschte Momente, z.B. Rollmomente. Dadurch ist eine gewünschte Regelung, z.B. Rollregelung, bei gleichzeitig blockierter sonstiger Regelung, z.B. Nick-Gier-Regelung, des Lenkflugkörpers möglich.
Praktischerweise ist die weitere Ansteuerelektronik mit dem Zeitgeber so signaltechnisch verbunden, dass nach Ablauf der vorgegebenen Zeitspanne die von der Ansteuerelektronik erzeugten vollständigen Ansteuersignale anstelle der von der weiteren Ansteuerelektronik modifizierten Ansteuersignale an die Stellantriebe weiterleitbar sind.

Es kann vorgesehen sein, dass über den Zeitgeber eine Stromversorgung nach Ablauf der vorgegebenen Zeitspanne von der weiteren Ansteuerelektronik auf die eigentliche Ansteuerelektronik umgeschaltet wird. Dadurch sind nicht nur über die weitere Ansteuerelektronik keine modifizierten Ansteuersignale mehr erzeugbar, sondern auch erst ab diesem Zeitpunkt von der eigentlichen Ansteuerelektronik Ansteuersignale erzeugbar. Ein Vermischen der von den beiden Ansteuerelektroniken erzeugten Ansteuersignale und damit eine fehlerhafte Lenkung des Lenkflugkörpers, die Lenkflugkörper und / oder eine Trägerplattform gefährden könnte, ist dadurch vermeidbar.

In einer anderen Variante kann vorgesehen sein, dass die weitere Ansteuerelektronik so mit der anderen Ansteuerelektronik signaltechnisch verbunden ist, dass die von der anderen Ansteuerelektronik erzeugten Ansteuersignale durch die von der weiteren Ansteuerelektronik erzeugten modifizierten Ansteuersignale überschreibbar sind. Der Zeitgeber kann dann so mit der weiteren Ansteuerelektronik signaltechnisch verbunden sein, das kein Überschreiben der von der Ansteuerelektronik erzeugten Ansteuersignale mehr erfolgt und somit keine modifizierten Ansteuersignale mehr an die Stellantriebe weiterleitbar sind.

In einer weiteren Variante kann vorgesehen sein, dass der Zeitgeber so mit der Steuer-und Navigationseinrichtung und der weiteren Ansteuerelektronik signaltechnisch verbunden ist, dass nach Ablauf der vorgegebenen Zeitspanne auch keine erwünschten Kommandos, z.B. Rollkommandos, mehr auf die weitere Ansteuerelektronik aufschaltbar sind.

Die Erfindung betrifft außerdem ein Verfahren zur Lenkung eines von einer Trägerplattform abkoppelbaren Lenkflugkörpers mit zumindest zwei verschwenkbaren Flügelanordnungen zur Erzeugung von Roll-, Nick- und Giermomenten und mit einer zuvor beschriebenen Flugregelungseinrichtung. Das Verfahren wird erfindungsgemäß gelöst durch die Merkmale des Patentanspruchs 14. Es wird vorgeschlagen, dass in einem ersten Verfahrensschritt ein Abkoppeln des Lenkflugkörpers von der Trägerplattform und in einem weiteren Verfahrensschritt eine Aktivierung eines Zeitgebers der Flugregelungseinrichtung erfolgt. Weiterhin wird vorgeschlagen, dass ein Verzicht auf die Regelung mindestens einer der Lagen Rolllage und/oder Nicklage und/oder Gierlage des Lenkflugkörpers während einer von dem Zeitgeber vorgegebenen Zeitspanne mittels modifizierter Ansteuersignale für die Stellantriebe der Flügelanordnungen erfolgt, die nur erwünschte Momente, z.B. ein Rollmoment, auf den Lenkflugkörper bewirken, in einer ersten, an die Abkopplung anschließenden Flugphase erfolgt und eine Regelung der Roll-, Nick- und Gierlage des Lenkflugkörpers nach Ablauf der von dem Zeitgeber vorgegebenen Zeitspanne in einer zweiten, an die erste Flugphase anschließenden Flugphase, mittels unmodifizierter vollständiger Ansteuersignale für die Stellantriebe der Flügelanordnungen erfolgt.

Durch das Verfahren ist es möglich, dass während einer ersten Flugphase, also einer Übergangsphase nach dem Abkoppeln des Lenkflugkörpers ausschließlich die gewünschte Lage, z.B. Rolllage, des Lenkflugkörpers geregelt wird, wohingegen nach Ablauf der von dem Zeitgeber vorgegebenen Zeitspanne, also in der zweiten Flugphase, bei der es sich um eine Freiflug- oder Marschphase des Lenkflugkörpers handeln kann, nicht nur gewünschte Lage, sondern alle Lagen, z.B. auch Nick- und Gierlage, regelbar sind. Indem über die elektronische Schaltung während einer von dem Zeitgeber vorgegebenen Zeitspanne nur solche Ansteuersignale für die Stellantriebe bereit gestellt werden, die nur gewünschte, z.B. Rollmomente, auf den Lenkflugkörper ausüben, kann ein z.B. rollempfindlicher Lenkflugkörper in der ersten Flugphase rollstabillisiert, jedoch hinsichtlich unerwünschter Nick- und Giermomente blockiert werden. Dadurch ist ein sicherer Abgang des Lenkflugkörpers von einer Trägerplattform und eine anschließende Lenkung auf einer gewünschten Flugbahn sichergestellt.

Die bisherige Beschreibung vorteilhafter Ausgestaltungen der Erfindung enthält zahlreiche Merkmale, die in den einzelnen abhängigen Patentansprüchen teilweise zu mehreren zusammengefasst wiedergegeben sind. Diese Merkmale wird der Fachmann zweckmäßigerweise auch einzeln betrachten und zu sinnvollen weiteren Kombinationen zusammenfassen. Insbesondere sind diese Merkmale jeweils einzeln und in beliebiger geeigneter Kombination mit der erfindungsgemäßen Flugregelungseinrichtung und dem erfindungsgemäßen Verfahren zur Lenkung eines von einer Trägerplattform abkoppelbaren Lenkflugkörpers gemäß den unabhängigen Patentansprüchen kombinierbar.

Die zuvor beschriebenen Vorteile, Eigenschaften und Merkmale dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und / oder mit einem unabhängigen Patentanspruch kombiniert werden.

Es zeigen:
- Fig. 1: eine schematische Darstellung eines Lenkflugkörpers,
- Fig. 2: eine Ausführungsvariante einer Flugregelungseinrichtung,
- Fig. 3: eine weitere Ausführungsvariante einer Flugregelungseinrichtung und
- Fig. 4: eine dritte Ausführungsvariante einer Flugregelungseinrichtung.

Gleiche Teile werden dabei mit gleichen Bezugszeichen bezeichnet.

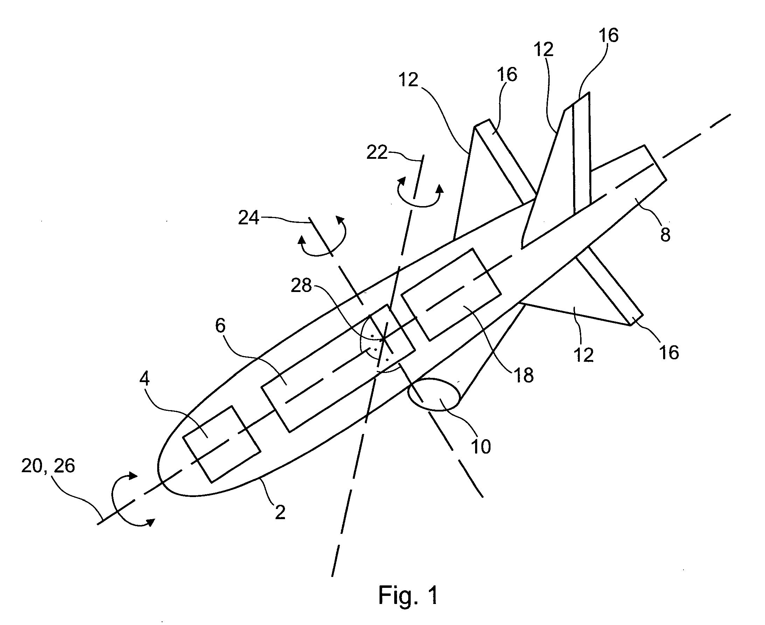

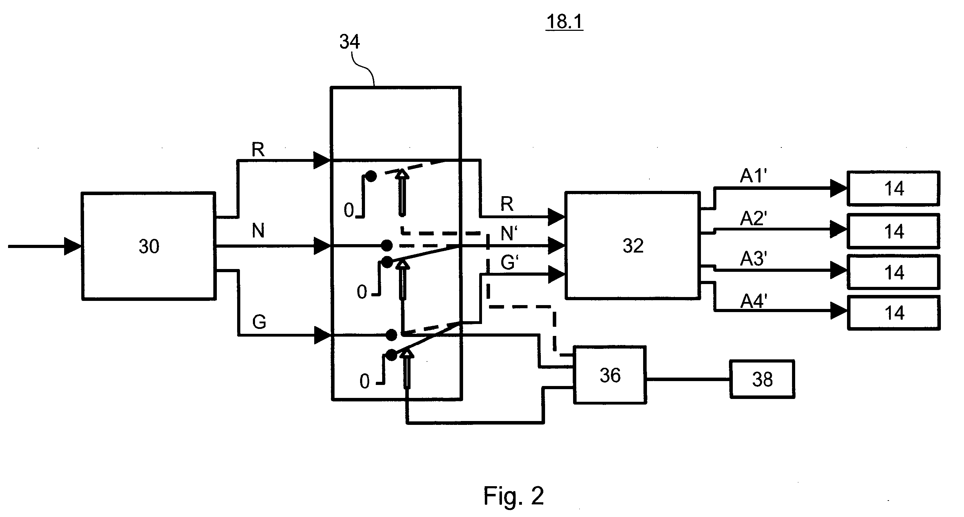

Fig. 1 zeigt schematisiert einen Lenkflugkörper 2 mit einem Radarsucher 4, einem Wirkteil 6 und einem den Antriebsbereich bildenden Heckbereich 8. Der Lenkflugkörper 2 weist auf seiner Unterseite einen Lufteinlauf 10 für sein Triebwerk auf. Der Lenkflugkörper 2 verfügt weiterhin über vier Flügelanordnungen 12, deren Tragflächen in X-Anordnung im Heckbereich 8 angeordnet sind, von denen in Figur 1 jedoch nur drei zu sehen sind. Die Tragflächen sind mittels Stellantrieben 14 (siehe Fig. 2, 3 oder 4) auslenkbaren Rudern 16 als Endklappen versehen. Der Radarsucher 4 ist mit einer Flugregelungseinrichtung 18 verbunden, die aus den von dem Radarsucher 4 gelieferten Daten Ansteuersignale zum Ansteuern der Stellantriebe 14 der Flügelanordnungen 12 bzw. deren Ruder 16 zum Lenken des Lenkflugkörpers 2 auf einer gewünschten Flugbahn erzeugt. Jeder Flügelanordnung 12 ist dabei ein eigener Stellantrieb 14 zugeordnet. Je nach Stellung bzw. Ausschlag der Ruder 16 werden unterschiedliche, auf den Lenkflugkörper 2 um eine Rollachse 20 und / oder eine Nickachse 22 und / oder eine Gierachse 24 wirkende Drehmomente erzeugt. Im vorliegenden beispielhaften Lenkflugkörper 2 fällt die Rollachse 20 mit der Längsachse 26 des Lenkflugkörpers 2 zusammen. Die Roll-, Nick- und Gierachse 20, 22, 24 schneiden sich im Gesamtschwerpunkt 28 des Lenkflugkörpers 2, der im vorliegenden Beispiel auf der Längsachse 26 des Lenkflugkörpers 2 liegt. Aufgrund des auf seiner Unterseite befindlichen Lufteinlaufs 10 ist der Lenkflugkörper 2 empfindlich gegenüber Rollstörungen bzw. unerwünschter Rollmomente, denn diese können dazu führen, das der Lenkflugkörper 2 um bspw. 180° um seine Längsachse 26 gedreht wird, so dass sich der Lufteinlauf 10 bezogen auf eine horizontale Flugrichtung des Lenkflugkörpers 2 nun auf dessen Oberseite befindet, wodurch eine Funktionsweise seines Triebwerks zumindest beeinträchtigt und der Lenkflugkörper 2 nur noch schwer lenkbar ist.

Solchen unerwünschten Rollmomenten, die insbesondere nach dem Abkoppeln des Lenkflugkörpers 2 von einer Startvorrichtung einer Trägerplattform für den Lenkflugkörper aufgrund der dabei auftretenden aerodynamischen Kräfte auftreten können, kann beispielsweise durch Flugregelungseinrichtungen 18, wie in den Figuren 2 - 4 gezeigt, entgegengewirkt werden.

Fig. 2 zeigt ein Ausführungsbeispiel einer Flugregelungseinrichtung 18.1. Die Flugregelungseinrichtung 18.1 umfasst eine Steuer- und Navigationseinrichtung 30, die die vom Radarsucher 4 bzw. dessen Elektronik erzeugten Daten empfängt und daraus Rollkommandos R, Nickkommandos N und Gierkommandos G zur Lenkung des Lenkflugkörpers 2 bzw. zur Weiterleitung an eine mit der Steuer- und Navigationseinrichtung 30 signaltechnisch verbundenen Ansteuerelektronik 32, bei der es sich um einen sogenannten Ruder-Mixer handelt, generiert. Die Ansteuerelektronik 32 ist dazu eingerichtet, aus den Roll-, Nick- und Gierkommandos R, N, G individuelle Ansteuersignale A1, A2, A3 und A4 für den jeweiligen Stellantrieb 14 jeder Flügelanordnung 12 zu generieren. Weiter weist die Flugregelungseinrichtung 18.1 eine elektronische Schaltung in Form eines Filters 34 auf. Das Filter 34 ist signaltechnisch zwischen der Steuer- und Navigationseinrichtung 30 und der Ansteuerelektronik 32 angeordnet. Die drei Signaleingänge des Filters 34 werden dabei mit den Roll-, Nick- und Gierkommandos R, N, G der Steuer- und Navigationseinrichtung 30 beaufschlagt. Das Filter 34 ist weiterhin so mit einem Zeitgeber 36 signaltechnisch verbunden, dass eine Durchleitung der Nickkommandos N und der Gierkommandos G während einer von dem Zeitgeber 36 vorgegebenen Zeitspanne unterbunden wird und nach Ablauf dieser Zeitspanne eine unveränderte Durchleitung der Nickkommandos N und Gierkommandos G erfolgt. Die Rollkommandos R hingegen passieren das Filter 34 stets unverändert. In der vorliegenden Darstellung der Flugregelungseinrichtung 18.1 ist die durch den Zeitgeber 26 vorgegebene Zeitspanne noch nicht abgelaufen, das Filter 34 also "aktiv". Die nach oben gerichteten Doppelpfeile deuten die zeitgesteuerte Umschaltung durch den Zeitgeber 36 nach Ablauf der vorgegebenen Zeitspanne von den modifizierten Nickkommandos N' und Gierkommandos G', die in diesem Beispiel auf Null gesetzt werden, auf die von der Steuer- und Navigationseinrichtung 30 erzeugten Nickkommandos N und Gierkommandos G an. Aufgrund der noch nicht abgelaufenen Zeitspanne wird die Ansteuerelektronik 32 bzw. werden deren Signaleingänge nun mit den unmodifizierten Rollkommandos R, aber den modifizierten Nick- und Gierkommandos N', G' beaufschlagt. Die Ansteuerelektronik 32 erzeugt daraus modifizierte Ansteuersignale A1', A2', A3', A4' für die Stellantriebe 14 während der von dem Zeitgeber 36 vorgegebenen Zeitspanne (wie in Fig. 2 dargestellt). Nach Ablauf der Zeitspanne, also bei "passivem" Filter 34 liegen an den Signalausgängen der Ansteuerelektronik 32 wieder unmodifizierte Ansteuersignale A1, A2, A3, A4 vor. Sowohl Filter 34 als auch Zeitgeber 36 sind in Hardware realisiert. Der Zeitgeber 36 wird über einen Sensor 38 in Gang gesetzt, der dazu eingerichtet ist, ein Abkoppeln des Lenkflugkörpers 2 von der Startplattform, an der er befestigt ist, zu sensieren.

Die Funktionsweise der Flugregelungseinrichtung 18.1 ist wie folgt: Das Abkoppeln des Lenkflugkörpers 2 von der Startplattform wird vom Sensor 38 sensiert. Dieser setzt den Zeitgeber 36 in Gang, der nun wiederum für die vorgegebene Zeitspanne das Filter 34 sozusagen "aktiviert", so dass während dieser Zeitspanne nur eine ausschließliche Regelung der Rolllage des Lenkflugkörpers 2 erfolgt, da eine Durchleitung der von der Steuer- und Navigationseinrichtung 30 stammenden Nick- und Gierkommandos N, G unterbunden wird bzw. diese mit Null überschrieben werden - oder anders ausgedrückt: die Nick- und Gierkommandos N, G herausgefiltert werden - und die Ansteuerelektronik 32 dadurch nur solche Ansteuersignale A1', A2', A3', A4' für die Stellantriebe 14 erzeugt, die ein Rollmoment auf den Lenkflugkörper 2 bewirken. Nach Ablauf der Zeitspanne bzw. einer ersten Flugphase wird das Filter 34 zeitgesteuert umgeschaltet bzw. "passiv" / deaktiviert, so dass die Roll-, Nick- und Gierlage des Lenkflugkörpers 2 wieder über die Stellantriebe 14 regelbar ist, da die Flugregelungseinrichtung 18.1 nun keine modifizierten Ansteuersignale A1', A2', A3', A4', sondern die unmodifizierten Ansteuersignale A1, A2, A3, A4 an die Stellantriebe 14 ausgibt.

Fig. 2 zeigt gestrichelt noch eine allgemeine Ausführungsform der Erfindung. Jedes der drei Kommandos R, N, G - auch in Zweierkombinationen - kann hierbei wahlweise unverändert bzw. ungeschaltet oder geschaltet durch das Filter 34 hindurchgeleitet werden. Hierbei kann auch wahlweise das Rollkommando R genullt werden. Je nachdem, welche der drei Kommandos R,N,G während der Zeitspanne genullt werden, verbleiben nur die restlichen Kommandos (durch das Filter 34 unverändert bzw. ungenullt) zur Steuerung des Lenkflugkörpers 2.

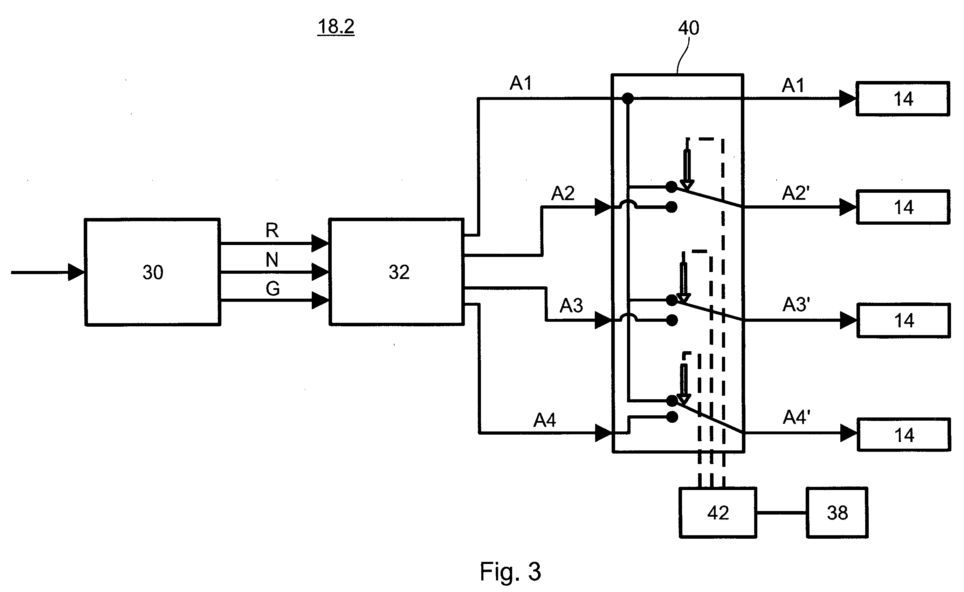

Fig. 3 zeigt ein weiteres Ausführungsbeispiel für eine Flugregelungseinrichtung 18.2. Die Flugregelungseinrichtung 18.2 ist ähnlich zur Flugregelungseinrichtung 18.1 aufgebaut, so dass daher auch auf diese verwiesen wird. Es kommt auch hier ein Filter 40 zum Einsatz, welches jedoch in dieser Variante signaltechnisch zwischen der Ansteuerelektronik 32 und den Stellantrieben 14 angeordnet ist. Die vier Signaleingänge des Filters 40 werden dabei mit den von der Ansteuerelektronik 32 erzeugten Ansteuersignalen A1, A2, A3, A4 beaufschlagt. Das Filter 40 ist weiterhin so mit einem Zeitgeber 40 signaltechnisch verbunden, dass während einer von dem Zeitgeber 42 vorgegebenen Zeitspanne die an den vier Signalausgängen des Filters 40 vorliegenden Ansteuersignale A1', A2', A3', A4' identisch sind. Fig. 3 stellt so wie Fig. 2 die Phase dar, in der das Filter 40 "aktiv" ist, die vom Zeitgeber 42 vorgegebene Zeitspanne also noch nicht abgelaufen ist. Durch das Filter 40 wird in dieser Phase eine Gleichschaltung der Ausschläge der Ruder 16 erzwungen. Es werden keine individuellen, sich voneinander unterscheidende Ansteuersignale A1, A2, A3, A4 an die Stellantriebe 14, wie in der nachfolgend anschließenden Phase erzeugt, die sowohl eine Roll- als auch eine Nick-Giersteuerung des Lenkflugkörpers 2 erlaubt. Vielmehr wird die Anforderung für den Ausschlag eines individuellen Ruders 16, also dessen Ansteuersignal auch an die anderen drei Ruder 16 geleitet, wodurch ein gleichsinniges Ausschlagen der vier Ruder 16 erzwungen wird bzw. nur eine Regelung der Rolllage möglich ist. Vorliegend wird das Ansteuersignal A1 für einen der vier Stellantriebe 14 durch das Filter 40 auch den anderen drei Stellantrieben 14 zugewiesen, so dass gilt A2'=A3'=A4'=A1. Die anderen drei Stellantriebe 14 erhalten also modifizierte Ansteuersignale A2', A3', A4' bzw. die Gesamtheit der vier Ansteuersignale ist modifiziert, so dass nur Rollmomente erzeugbar sind. Die nach unten gerichteten Doppelpfeile deuten die zeitgesteuerte Umschaltung durch den Zeitgeber 42 nach Ablauf der vorgegebenen Zeitspanne an, nach welcher die von der Ansteuerelektronik erzeugten Ansteuersignale A1, A2, A3, A4 das Filter 40 so passieren, als ob es gar nicht vorhanden wäre.

Ähnlich wie bei der Flugregelungseinrichtung 18.1 wird bei der Flugregelungseinrichtung 18.2 der Zeitgeber 42 in Gang gesetzt, sobald der Sensor 38 ein Abkoppeln des Lenkflugkörpers 2 von seiner Startplattform sensiert hat. Während der von dem Zeitgeber 42 vorgegebenen Zeitspanne wird allen vier Stellantrieben 14 das für einen der Stellantriebe vorgesehene Ansteuersignal A1 über das Filter 40 zugeführt bzw. liegt an den vier Signalausgängen des Filters 40 jeweils das gleiche Ansteuersignal A1 vor. Nach Ablauf der Zeitspanne erfolgt über den Zeitgeber 42 eine Aufhebung der identischen Signalzuweisung, so dass die Ansteuersignale A1, A2, A3, A4 unverändert durch das Filter 40 hindurch geleitet werden.

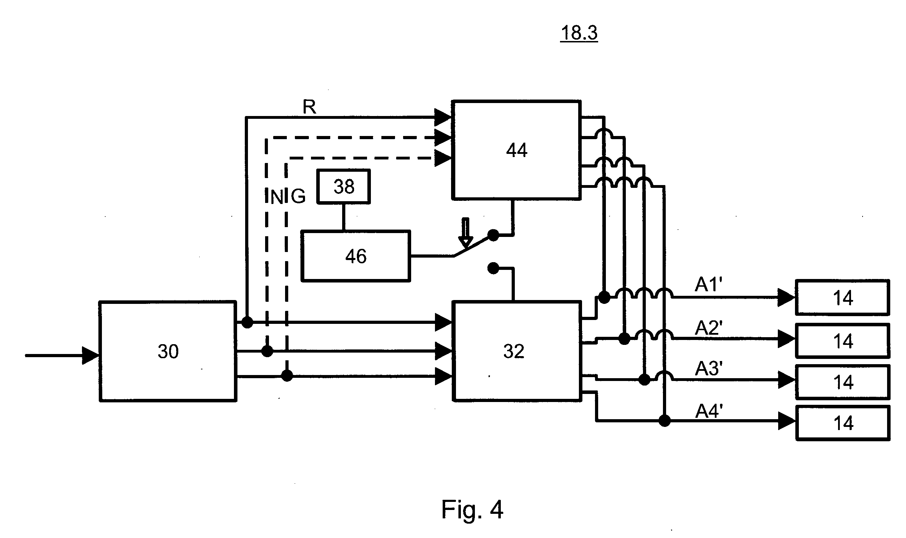

Fig. 4 zeigt noch ein Ausführungsbeispiel für eine Flugregelungseinrichtung 18.3. Die Flugregelungseinrichtung 18.3 umfasst so wie die Flugregelungseinrichtungen 18.1 und 18. 2 eine Steuer- und Navigationseinrichtung 30, die signaltechnisch mit einer Ansteuerelektronik 32 in Form eines Ruder-Mixers verbunden ist. Darüber hinaus umfasst die Flugregelungseinrichtung 18.3 eine weitere Ansteuerelektronik 44 bzw. Ruder-Mixer. Während die drei Signalausgänge der Steuer- und Navigationseinrichtung 30, an denen die aus den Daten des Radarsuchers 4 erzeugten Roll-, Nick- und Gierkommandos R, N, G vorliegen, mit den drei Signaleingängen der Ansteuerelektronik 32 zur Erzeugung von Ansteuersignalen A1, A2, A3, A4 für die vier Stellantriebe 14 verbunden sind, weist die weitere Ansteuerelektronik 44 nur einen Signaleingang auf, auf den nur die von der Steuer- und Navigationseinrichtung 30 erzeugten Rollkommandos R über eine entsprechende Signalleitung aufgeschaltet werden. Hierdurch können durch die weitere Ansteuerelektronik 44 stets nur Rollkommandos R verarbeitet werden und dadurch an den vier Signalausgängen der Ansteuerelektronik 44 nur solche modifizierten Ansteuersignale A1', A2', A3', A4' generiert werden, die nur Ausschläge der Ruder 16 über die Stellantriebe 14 bewirken können, die ein Rollmoment auf den Lenkflugkörper 2 ausüben, jedoch keine Nick- und Giermomente.

Um den Lenkflugkörper 2 sicher von seiner Startplattform abkoppeln zu können, umfasst die Flugregelungseinrichtung 18.3 einen Zeitgeber 46, der über einen Sensor 38 in Gang gesetzt werden kann, der dazu eingerichtet ist, den Abkoppelvorgang zu sensieren. Der Zeitgeber 46 sorgt dafür, dass der Lenkflugkörper 2 während einer von dem Zeitgeber 46 vorgegebenen Zeitspanne hinsichtlich seiner Rolllage regelbar ist, jedoch eine Beaufschlagung des Lenkflugkörpers 2 mit unerwünschten Nick- und Giermomenten unterbindbar ist. Hierzu ist der Zeitgeber 46 mit einer nicht gezeigten Stromversorgung verbunden und so eingerichtet, dass er nach Ablauf der Zeitspanne eine signaltechnische Verbindung mit der Ansteuerelektronik 44 unterbricht und eine signaltechnische Verbindung mit der Ansteuerelektronik 32 herstellt. Über den Zeitgeber 46 wird also zeitgesteuert von der weiteren Ansteuerelektronik 44 auf die Ansteuerelektronik 32 umgeschaltet, so dass ab dem Zeitpunkt des Umschaltens eine Lenkung des Lenkflugkörpers 2 um Roll-, Nick- und Gierachse 20, 22, 24 durch Erzeugung entsprechender Momente möglich ist. Ein Vermischen der von den beiden Ansteuerelektroniken 44 und 32 erzeugten Ansteuersignale A1', A2', A3', A4' bzw. A1, A2, A3, A4 und damit eine fehlerhafte Lenkung des Lenkflugkörpers 2 oder ein Drehen des Lenkflugkörpers 2, so dass sein Lufteinlass 10 nach oben ausgerichtet ist, ist dadurch vermeidbar - denn über den Zeitgeber 46 wird dafür gesorgt, dass zeitlich gesehen jeweils immer nur eine Ansteuerelektronik 44, 32 mit Strom versorgt wird.

Fig. 4 zeigt die Flugregelungseinrichtung 18.3 zu einem Zeitpunkt, in dem die von dem Zeitgeber 46 vorgegebene Zeitspanne noch nicht abgelaufen ist. Aktuell ist also mit der Flugregelungseinrichtung 18.3 eine an den Abkoppelvorgang anschließende erste Flugphase des Lenkflugkörpers 2 regelbar, in welcher dieser rollstabilisiert wird und gleichzeitig ein Nicken und Gieren des Lenkflugkörpers 2 ausgeschlossen wird. Nach Ablauf der vorgegebenen Zeitspanne würde dann ein Umschalten auf die eigentliche Ansteuerelektronik 32 erfolgen, so dass sich an die erste Flugphase eine zweite Flugphase, wie eine Marsch- oder Freiflugphase, des Lenkflugkörpers 2 anschließen kann, in der der Lenkflugkörper 2 durch Ansteuerung der Stellantriebe 14 über die Ansteuerelektronik 32 in seiner Roll-, Nick- und Gierlage steuerbar und damit entlang einer gewünschten Flugbahn führbar ist.

Fig. 4 zeigt gestrichelt nochmals eine allgemeine Ausführungsform der Erfindung. Hier ist wahlweise ein beliebiges oder zwei der Roll-, Nick- und Gierkommandos R, N, G auf die Ansteuerelektronik 44 geführt. Die oder das restliche Kommando bleibt unverbunden. Nur die verbundenen Kommandos werden dann in der Ansteuerelektronik 44 verarbeitet. Die nicht verbundenen Kommandos werden in der Ansteuerelektronik 44 so betrachtet, als wären sie Null, bleiben also unverarbeitet und damit genullt.

### Bezugszeichenliste

- 2: Lenkflugkörper
- 4: Radarsucher
- 6: Wirkteil
- 8: Heckbereich
- 10: Lufteinlauf
- 12: Flügelanordnung
- 14: Stellantrieb
- 16: Ruder
- 18: Flugregelungseinrichtung
- 18.1: Flugregelungseinrichtung
- 18.2: Flugregelungseinrichtung
- 18.3: Flugregelungseinrichtung
- 20: Rollachse
- 22: Nickachse
- 24: Gierachse
- 26: Längsachse von 2
- 28: Gesamtschwerpunkt von 2
- 30: Steuer- und Navigationseinrichtung
- 32: Ansteuerelektronik
- 34: Filter
- 36: Zeitgeber
- 38: Sensor
- 40: Filter
- 42: Zeitgeber
- 44: Ansteuerelektronik
- 46: Zeitgeber
- R: Rollkommando
- N: Nickkommando
- G: Gierkommando
- R': modifiziertes Rollkommando
- N': modifiziertes Nickkommando
- G': modifiziertes Gierkommando
- A1: Ansteuersignal
- A2: Ansteuersignal
- A3: Ansteuersignal
- A4: Ansteuersignal
- A1': modifiziertes Ansteuersignal
- A2': modifiziertes Ansteuersignal
- A3': modifiziertes Ansteuersignal
- A4': modifiziertes Ansteuersignal

## Patentansprüche

1. Flugregelungseinrichtung (18) für einen um eine Roll-, Nick- und Gierachse (20, 22, 24) lenkbaren Lenkflugkörper (2) mit zumindest zwei, zumindest teilweise verschwenkbaren Flügelanordnungen (12) zur Erzeugung von Roll-, Nick- und Giermomenten umfassend eine Steuer- und Navigationseinrichtung (30) und eine mit der Steuer- und Navigationseinrichtung (30) signaltechnisch verbundene Ansteuerelektronik (32) für die Stellantriebe (14) der Flügelanordnungen (12), wobei
a) die Steuer- und Navigationseinrichtung (30) dazu eingerichtet ist, Roll-, Nick- und Gierkommandos (R, N, G) zur Lenkung des Lenkflugkörpers (2) zu generieren und
b) die mit Roll-, Nick- und Gierkommandos (R, N, G) beaufschlagte Ansteuerelektronik (32) dazu eingerichtet ist, aus den Roll-, Nick- und Gierkommandos Ansteuersignale (A1, A2, A3, A4) für die Stellantriebe (14) der Flügelanordnungen (12) zu generieren, **gekennzeichnet durch**
eine signalverarbeitende elektronische Schaltung (34, 40, 44), die so ausgestaltet und mit der Steuer- und Navigationseinrichtung (30) und / oder mit der Ansteuerelektronik (32) signaltechnisch verbunden ist, dass die Stellantriebe (14) wahlweise mit vollständigen Ansteuersignalen (A1, A2, A3, A4) beaufschlagbar sind, die den Roll-, Nick- und Gierkommandos (R, N, G) der Steuer- und Navigationseinrichtung (30) entsprechen oder mit modifizierten Ansteuersignalen (A1', A2', A3', A4') beaufschlagbar sind, die derart modifiziert sind, dass mindestens eines der Roll-, Nick-und Gierkommandos (R, N, G) der Steuer- und Navigationseinrichtung (30) genullt ist.

2. Flugregelungseinrichtung (18) nach Anspruch 1,
**dadurch gekennzeichnet,**
**dass** die elektronische Schaltung (34, 40, 44) signaltechnisch derart mit einem Zeitgeber (36, 42, 46) verbunden ist, dass während einer von dem Zeitgeber (36, 42, 46) vorgegebenen Zeitspanne die Stellantriebe (14) mit den modifizierten Ansteuersignalen (A1', A2', A3', A4') beaufschlagbar sind, und nach Ablauf der Zeitspanne die Stellantriebe (14) mit den vollständigen Ansteuersignalen (A1, A2, A3, A4) beaufschlagbar sind.

3. Flugregelungseinrichtung (18) nach Anspruch 1 oder 2,
**dadurch gekennzeichnet,**
**dass** der Zeitgeber (36, 42, 46) in Hardware realisiert ist.

4. Flugregelungseinrichtung (18) nach einem der Ansprüche 2 oder 3,
**dadurch gekennzeichnet,**
**dass** der Zeitgeber (36, 42, 46) über einen Sensor (38) in Gang setzbar ist, der dazu eingerichtet ist, ein Abkoppeln des Lenkflugkörpers (2) von einer Trägerplattform zu sensieren.

5. Flugregelungseinrichtung (18.1, 18.2) nach einem der vorhergehenden Ansprüche,
**dadurch gekennzeichnet,**
**dass** die elektronische Schaltung ein Filter (34, 40) ist.

6. Flugregelungseinrichtung (18.1) nach Anspruch 5,
**dadurch gekennzeichnet,**
**dass** das Filter (34) signaltechnisch zwischen Steuer- und Navigationseinrichtung (30) und Ansteuerelektronik (32) so angeordnet ist, dass die Signaleingänge des Filters (34) mit den Roll-, Nick- und Gierkommandos (R, N, G) der Steuer- und Navigationseinrichtung (30) beaufschlagbar sind und die Signaleingänge der Ansteuerelektronik (32) mit durch das Filter (34) modifizierten Roll-, Nick- und Gierkommandos (R', N', G') zur Erzeugung der modifizierten Ansteuersignale (A1', A2', A3', A4') oder unmodifizierten Roll-, Nick- und Gierkommandos (R, N, G) zur Erzeugung der vollständigen Ansteuersignale (A1, A2, A3, A4) beaufschlagbar sind.

7. Flugregelungseinrichtung (18.1) nach Anspruch 6,
**dadurch gekennzeichnet,**
**dass** das Filter (34) so ausgestaltet ist, dass eine signaltechnische Durchleitung der Roll- (R) und/oder Nick- (N) und/oder Gierkommandos (G) der Steuer- und Navigationseinrichtung (30) an die Ansteuerelektronik (32) wahlweise ermöglichbar oder verhinderbar ist.

8. Flugregelungseinrichtung (18.1) nach Anspruch 7,
**dadurch gekennzeichnet,**
**dass** das Filter (34) mit dem Zeitgeber (36) so signaltechnisch verbunden ist, dass die signaltechnische Durchleitung bis zum Ablauf der vorgegebenen Zeitspanne verhinderbar ist und nach Ablauf der vorgegebenen Zeitspanne die von der Steuer-und Navigationseinrichtung (30) erzeugten Roll-, Nick- und Gierkommandos (R, N, G) das Filter (34) unmodifiziert passieren.

9. Flugregelungseinrichtung (18.2) nach Anspruch 5,
**dadurch gekennzeichnet,**
**dass** das Filter (40) signaltechnisch zwischen der Ansteuerelektronik (32) und den Stellantrieben (14) so angeordnet ist, dass die Signaleingänge des Filters (40) mit den von der Ansteuerelektronik (32) erzeugten vollständigen Ansteuersignalen (A1, A2, A3, A4) beaufschlagbar sind und die Stellantriebe (14) mit den vom Filter (40) modifizierten Ansteuersignalen (A1, A2', A3', A4') beaufschlagbar sind.

10. Flugregelungseinrichtung (18.2) nach Anspruch 9,
**dadurch gekennzeichnet,**
**dass** das Filter (40) so ausgestaltet ist, dass modifizierte Ansteuersignale (A1, A2', A3', A4') erzeugbar sind, die identisch sind.

11. Flugregelungseinrichtung (18.2) nach Anspruch 9 oder 10,
**dadurch gekennzeichnet,**
**dass** das Filter (40) mit dem Zeitgeber (42) so signaltechnisch verbunden ist, dass nach Ablauf der vorgegebenen Zeitspanne die von der Ansteuerelektronik (32) generierten vollständigen Ansteuersignale (A1, A2, A3, A4) das Filter (40) unmodifiziert passieren.

12. Flugregelungseinrichtung (18.3) nach einem der Ansprüche 1 bis 4,
**dadurch gekennzeichnet,**
**dass** es sich bei der elektronischen Schaltung (44) um eine weitere Ansteuerelektronik (44) handelt, die signaltechnisch mit der Steuer- und Navigationseinrichtung (30) derart verbunden ist, dass sie nur mit Roll- und/oder Nick- und/oder Gierkommandos (R, N, G) der Steuer- und Navigationseinrichtung (30) beaufschlagbar ist, von denen mindestens eines genullt ist, wobei die weitere Ansteuerelektronik (44) dazu eingerichtet ist, aus den Roll- und/oder Nick- und/oder Gierkommandos (R, N, G) modifizierte Ansteuersignale (A1', A2', A3', A4') für die Stellantriebe (14) zu erzeugen.

13. Flugregelungseinrichtung (18.3) nach Anspruch 12,
**dadurch gekennzeichnet,**
**dass** die weitere Ansteuerelektronik (44) mit dem Zeitgeber (46) so signaltechnisch verbunden ist, dass nach Ablauf der vorgegebenen Zeitspanne die von der Ansteuerelektronik (32) erzeugten vollständigen Ansteuersignale (A1, A2, A3, A4) anstelle der von der weiteren Ansteuerelektronik (44) modifizierten Ansteuersignale (A1', A2', A3', A4')an die Stellantriebe (14) weiterleitbar sind.

14. Verfahren zur Lenkung eines von einer Trägerplattform abkoppelbaren Lenkflugkörpers (2) mit zumindest zwei, zumindest teilweise verschwenkbaren Flügelanordnungen (12) zur Erzeugung von Roll-, Nick- und Giermomenten und mit einer Flugregelungseinrichtung (18) gemäß einem der vorhergehenden Patentansprüche 1 - 13 umfassend die Verfahrensschritte
a) Abkoppeln des Lenkflugkörpers (2) von der Trägerplattform,
b) Aktivierung eines Zeitgebers (36, 42, 46) der Flugregelungseinrichtung (18),
c) Verzicht auf die Regelung mindestens einer der Lagen Rolllage und/oder Nicklage und/oder Gierlage des Lenkflugkörpers (2) während einer von dem Zeitgeber (36, 42, 46) vorgegebenen Zeitspanne mittels modifizierter Ansteuersignale (A1', A2', A3', A4') für die Stellantriebe (14) der Flügelanordnungen (12), die das entsprechende mindestens eine Roll- und/oder Gier- und/oder Nickmoment, auf das verzichtet wird, auf den Lenkflugkörper (2) nicht bewirken, in einer ersten, an die Abkopplung anschließenden Flugphase und
d) Regelung der Roll-, Nick- und Gierlage des Lenkflugkörpers (2) nach Ablauf der von dem Zeitgeber (36, 42, 46) vorgegebenen Zeitspanne in einer zweiten, an die erste Flugphase anschließenden Flugphase, mittels unmodifizierter vollständiger Ansteuersignale (A1, A2, A3, A4) für die Stellantriebe (14) der Flügelanordnungen (12).
